Europäisches Patentamt

European Patent Office

Office européen des brevets

(11) Veröffentlichungsnummer: **0 674 464 A1**

## EUROPÄISCHE PATENTANMELDUNG

(21) Anmeldenummer: **94104619.5**

(22) Anmeldetag: **23.03.94**

(51) Int. Cl.[6]: **H04R 25/00**, G06G 7/60

(43) Veröffentlichungstag der Anmeldung:
**27.09.95 Patentblatt 95/39**

(84) Benannte Vertragsstaaten:
**CH DE DK FR LI NL**

(71) Anmelder: **Siemens Audiologische Technik GmbH**
**Gebbertstrasse 125**
**D-91058 Erlangen (DE)**

(72) Erfinder: **Weinfurtner, Oliver, Dipl.-Ing.**
**Wichernstrasse 16**
**D-91052 Erlangen (DE)**

(74) Vertreter: **Fuchs, Franz-Josef, Dr.-Ing. et al**
**Postfach 22 13 17**
**D-80503 München (DE)**

(54) **Programmierbares Hörgerät mit Fuzzy-Logik-Controller.**

(57) Das Hörgerät (1) zeichnet sich durch ein Regelungssystem dadurch aus, daß es für die automatische Umschaltung und Anpassung an die jeweilige Umgebungssituation einen dem Verstärker- und Übertragungsteil (4) zugeordneten Controller (6) aufweist, der in Abhängigkeit von die jeweilige Umgebungssituation kennzeichnenden Eingangsgrößen (7) eine Auswahl der im Datenträger (5) des Hörgerätes gespeicherten Parametersätze oder von Parametern zur Veränderung von Übertragungscharakteristiken des Hörgerätes vornimmt.

FIG 1

EP 0 674 464 A1

Die Erfindung betrifft ein programmierbares Hörgerät mit einem in seinen Übertragungseigenschaften zwischen Mikrofon und Hörer auf verschiedene Übertragungscharakteristika einstellbaren Verstärker- und Übertragungsteil, mit einem Datenträger, in dem Parametersätze für verschiedene Umgebungssituationen speicherbar sind und wobei die Übertragungscharakteristik des Verstärker- und Übertragungsteils in Abhängigkeit von der jeweiligen Umgebungssituation auf den zugeordneten Parametersatz automatisch umschaltbar ist.

Bei einem aus der EP-B-0 064 042 bekannten Hörgerät dieser Art sind in einem Hörgerätespeicher acht Parametersätze für unterschiedliche Übertragungscharakteristika für verschiedene Umgebungssituationen abgespeichert. Durch Betätigen eines Schalters können nacheinander die verschiedenen Parametersätze für die acht gespeicherten Programme abgerufen werden. Eine Steuereinheit steuert einen zwischen Mikrofon und Hörer eingeschalteten Signalprozessor, der dann eine erste, für eine vorgesehene Umgebungssituation bestimmte Übertragungsfunktion einstellt. Über den Schalter können jedoch die gespeicherten Signalübertragungsprogramme nur nacheinander abgerufen werden, bis nach Meinung des Hörgeräteträgers die gerade zur gegebenen Umgebungssituation passende Übertragungsfunktion gefunden ist. Andererseits soll nach der EP-B-0 064 042 auch ein automatisches Umschalten auf eine andere Übertragungsfunktion vorgesehen sein, wenn der Benutzer z.B. von einer geräuschvollen Umgebung in eine ruhige Umgebung kommt oder umgekehrt. Ohne daß für die automatische Umschaltung eine Lösung angegeben ist, soll diese Umschaltung wie die manuelle Umschaltung zyklisch erfolgen. Möchte man andere als die gespeicherten Übertragungsfunktionen einstellen, dann muß der nicht flüchtige Speicher durch eine externe Programmiereinheit gelöscht und durch diese erneut programmiert werden. Auf diese Weise ist auch eine Anpassung des programmierbaren Hörgerätes an eine sich ändernde Gehörschädigung möglich.

Aufgabe der Erfindung ist es, ein programmierbares Hörgerät zu schaffen, das sich durch ein Regelungssystem auszeichnet, welches eine automatische signalabhängige Auswahl und Einstellung von Hörsituationen aus gespeicherten Signalverarbeitungsparametern, bei Auswertung von Eingangs- oder Meßsignalen nach vorgebbaren Regeln, ermöglicht.

Erfindungsgemäß wird diese Aufgabe bei einem programmierbaren Hörgerät der eingangs genannten Art dadurch gelöst, daß zur automatischen Umschaltung dem Verstärker- und Übertragungsteil ein Controller zugeordnet ist, der in Abhängigkeit von die jeweilige Umgebungssituation kennzeichnenden Eingangsgrößen eine Auswahl der im Datenträger gespeicherten Parametersätze oder von Parametern zur Veränderung von Übertragungscharakteristiken des Hörgerätes vornimmt.

Bei dem Hörgerät nach der Erfindung sind in einem Datenträger Parameter und/oder Parametersätze abgespeichert, die zur sinnvollen Einstellung der Signalverarbeitungseinrichtungen des Hörgerätes in Abhängigkeit von bestimmten akustischen Situationen (z.B. in Ruhe, d.h. ohne störende Hintergrundgeräusche oder bei Gesprächssituation mit tieffrequentem Störgeräusch usw.) zur Verfügung stehen. Dabei ermöglicht die Erfindung die automatische signalabhängige Auswahl der jeweils für eine bestimmte Hörsituation optimalen gespeicherten Signalverarbeitungscharakteristik des Hörgerätes. Nach der Erfindung werden Eingangs- oder Meßsignale, die die tatsächliche Hörsituation kennzeichnen, im Hörgerät nach vorgebbaren Regeln ausgewertet und dann wird im Hörgerät die automatische und der jeweiligen Hörsituation angepaßte Einstellung aktiviert. Dies erfolgt nach der Erfindung mittels eines Controllers (Funktionsblockes) im Hörgerät, der auf dem Prinzip der Fuzzy-Logik beruht.

In vorteilhafter Ausführung ist im Hörgerät als Controller ein Fuzzy-Logik-Controller vorgesehen. Diese Ausführung ermöglicht es, beliebige Regelsätze für das Auswahlverhalten einzustellen. Die schaltungstechnische Realisierung des Fuzzy-Logik-Prinzips erfolgt vorzugsweise in analoger Schaltungstechnik, da beim momentanen Stand der Halbleitertechnik nur damit die hörgerätespezifischen Anforderungen, wie geringe Leistungsaufnahme, geringer Flächenbedarf usw., erfüllbar sind.

Nach einer Ausführung der Erfindung wählt der Controller bei einer Veränderung der akustischen Umgebungssituation abgespeicherte Parametersätze oder einzelne Parameterwerte aus und bewirkt damit eine diskontinuierliche Veränderung des Übertragungsverhaltens. Danach werden also die der jeweiligen Hörsituation entsprechenden Signalübertragungscharakteristika unter Verwendung kompletter abgespeicherter Parametersätze gebildet oder es wird lediglich auf benötigte Einzelparameter zurückgegriffen. Der Übergang von einer zur anderen Signalverarbeitungscharakteristik ist nach dieser Ausführung noch schrittweise.

Gemäß einer weiteren Ausführung der Erfindung bestimmt der Controller aus den die jeweilige Umgebungssituation kennzeichnenden Eingangsgrößen Steuersignale, die zu einer kontinuierlichen Veränderung des Übertragungsverhaltens führen.

Vorteilhafte Ausführungsformen der Erfindung sind durch die Patentansprüche 2 bis 22 gekennzeichnet.

Weitere Vorteile und Einzelheiten der Erfindung werden nachfolgend anhand der in den Figuren dargestellten Ausführungsbeispiele näher erläutert.

Es zeigen:

Figur 1 ein Blockschaltbild eines erfindungsgemäßen programmierbaren Hörgerätes,

Figur 2 eine Struktur des Fuzzy-Logik-Controllers mit Signalaufbereitung eines Hörgerätes gemäß FIG 1,

Figur 3 eine stromspiegelschaltung, die für die Fuzzyfizierungskomponente des Fuzzy-Logik-Controllers ein Eingangs-Stromsignal und ein Einheits-Stromsignal (Referenzsignal) mehrfach und mit den beiden Flußrichtungen bildet,

Figur 4 eine Schaltung des Fuzzy-Logik-Controllers zur Verarbeitung von Stromsignalen und von Einheits-Stromsignalen zur Bildung der linguistischen Terme,

Figur 5 eine Abbildung einer Eingangsgröße auf einem Teilsegment eines linguistischen Terms, zur Schaltung gemäß Figur 4,

Figur 6 eine weitere Schaltung des Fuzzy-Logik-Controllers zur Verarbeitung von Stromsignalen und von Einheits-Stromsignalen zur Bildung der linguistischen Terme,

Figur 7 eine Abbildung einer Eingangsgröße auf einem Teilsegment eines linguistischen Terms, zur Schaltung gemäß Figur 6,

Figuren 8, 9 Stromspiegelschaltungen zur Bildung des Komplements bei einer Negation im Regelwerk, die Gruppen von Schaltungen gemäß den Figuren 4 bzw. 6 nachgeordnet werden,

Figuren 10, 11 Schaltungsanordnungen zur Realisierung der logischen Operationen **AND** und **OR** als Minimum- und Maximum-Bildung,

Figur 12 Darstellungen zur Überlagerung der aktivierten Ausgangsterme und Bildung des Flächenschwerpunktes mit Ableitungen zu Berechnungsformeln,

Figur 13 beispielshafte Darstellungen des Grundprinzips für ein einfaches Fuzzy-Logik-Regelwerk und seine Bearbeitung,

Figur 14 ein Blockschaltbild zur Entscheidungsmittel-Komponente des Fuzzy-Logik-Controllers mit einer Auswahlfunktion von beispielsweise drei zur Auswahl stehenden Hörsituationen HS1, HS2 und HS3,

Figur 15 eine Schaltung zur Umsetzung eines analogen Stromsignals in ein digitales Spannungssignal.

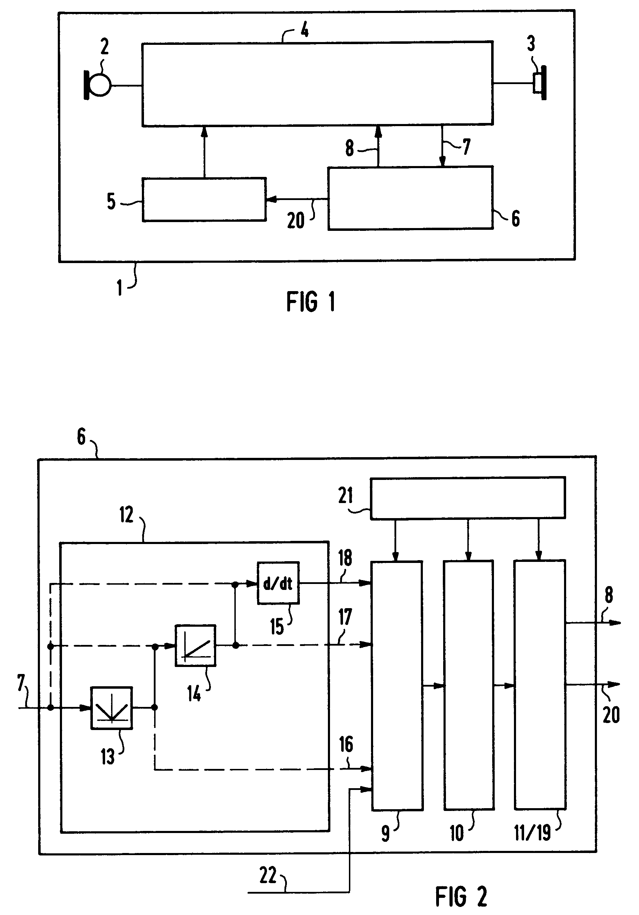

Das in Figur 1 schematisch dargestellte erfindungsgemäße Hörgerät 1 nimmt über ein Mikrofon 2 Schallsignale auf. Diese akustische Information wird im Mikrofon in elektrische Signale umgesetzt. Nach einer Signalbearbeitung in einem Verstärkungs- und Übertragungsteil 4 wird das elektrische Signal einem Hörer 3 als Ausgangswandler zugeführt. Um einen zusätzlichen Schallwandler oder einen sonstigen Sensor zu vermeiden, kann gemäß Ausführungsbeispiel aus dem Signalpfad zwischen dem Mikrofon 2 und dem Hörer 3 wenigstens eine Eingangs- oder Meßgröße 7 abgegriffen werden, die eine die jeweilige Umgebungssituation/Hörsituation kennzeichnende Größe darstellt. Das Hörgerät 1 umfaßt ferner einen Datenträger 5, in dem Parameter und/oder Parametersätze für Hörgerätecharakteristiken bei verschiedenen Umgebungssituationen speicherbar sind. Außerdem besitzt das Hörgerät 1 einen Controller 6, der dem Verstärker- und Übertragungsteil 4 zugeordnet ist und der in Abhängigkeit von die jeweilige Umgebungssituation/Hörsituation kennzeichnenden Eingangsgrößen 7 eine Auswahl der im Datenträger 5 gespeicherten Parametersätze oder von Parametern zur Veränderung von Übertragungscharakteristiken des Hörgerätes 1 vornimmt.

Als Controller 6 ist vorzugsweise ein Fuzzy-Logik-Controller vorgesehen, der aus den die jeweilige Umgebungssituation kennzeichnenden Eingangsgrößen 7 Steuersignale 8 bestimmt, die zu einer kontinuierlichen Veränderung des Übertragungsverhaltens des Hörgerätes führen.

In einfacher Ausführung kann der Controller bei sich ändernder Hörsituation eine schrittweise Anpassung der Übertragungscharakteristik des Hörgerätes bewirken. Andererseits ist mittels des Controllers aber auch eine kontinuierliche Veränderung des Übertragungsverhaltens des Hörgerätes möglich, indem der Controller direkt kontinuierliche Einstellgrößen einzelner Signalverarbeitungsparameter bestimmt.

Aus dem Signalpfad (bei Mehrkanal-Hörgeräten aus den Signalpfaden der Frequenzkanäle) wird an allen oder an ausgewählten relevanten Punkten das Eingangs- oder Meßsignal 7 abgegriffen und in geeigneter Weise aufbereitet (z.B. durch Gleichrichtung, Bildung geeigneter zeitlicher Mittelwerte sowie eventuell deren Ableitungen). Diese aufbereiteten Signale 16, 17, 18 sowie eventuelle weitere Systeminformationen 22 (z.B. ob Mikrofon- oder Telefonbetrieb gewünscht ist) werden einer Fuzzyfizierungs-Komponente 9 bzw. einer Inferenzbildungs-Komponente 10 zugeführt. Die Ausgänge des Controllers sind Steuersignale 20, welche die Einstellung der Hörsituationen bewirken oder die Einstellgrößen 8 einzelner Signalverarbeitungsparameter repräsentieren.

Das Prinzip eines Fuzzy-Logik-Reglers für Signalverarbeitungsfunktionen zeigt Figur 2. In einer Signalaufbereitung 12 werden aus wenigstens einer Meßgröße 7 (Eingangsgröße) z.B. durch eine Gleichrichtung 13 und/oder eine Mittelwertbildung 14 - Bildung eines zeitlichen Mittelwertes - und/oder eine zeitliche Ableitung 15 (Ableitungsblock d/dt) aus der/den Meßgröße(n) 7 aufbereitete Signale 16-18 gewonnen, die einer Fuzzyfizierungskomponente 9 des Fuzzy-Logik-Controllers 6 zugeführt werden. In an sich bekannter Ausführung sind der Fuzzyfizierungskomponente 9 des Fuzzy-Logik-Controllers 6 noch eine Inferenzbildungs-Komponente 10 sowie eine Defuzzyfizierungs-Komponente 11 nachgeordnet.

Gemäß einer Ausführung weist der Fuzzy-Logik-Controller 6 die Komponenten zur Signalaufbereitung 12, zur Fuzzyfizierung 9 und Inferenzbildung 10 sowie ein Entscheidungsmittel 19 auf, das aus eingehenden unscharfen Signalen scharfe Ausgangswerte 20 durch Auswahl aus einem vorgegebenen Satz von Ausgangswerten bestimmt, wobei der Signalaufbereitung 12 als Eingangsgrößen 7 Meßgrößen aus dem Signalpfad zwischen Mikrofon 2 und Hörer 3 zugeführt und diese Meßgrößen 7 in der Signalaufbereitung 12 durch Gleichrichtung 13 und/oder Mittelwertbildung 14 und/oder zeitliche Ableitung 15 bearbeitet und wobei die aus den Meßgrößen aufbereiteten Signale 16, 17, 18 der Fuzzyfizierung 9 zugeführt werden.

In weiterer Ausbildung der Erfindung ist das Regelverhalten des Controllers 6 von einem Regelwerk bestimmt, wobei dieses Regelwerk teilweise in der Struktur des Controllers implementierbar ist und wobei dem Controller 6 ein Datenspeicher 21, beispielsweise ein EEPROM zugeordnet ist, in dem Konfigurationsinformation für die Controller-Komponenten abrufbar gespeichert ist.

Das Regelwerk des Fuzzy-Logik-Controllers 6 ist im Ausführungsbeispiel kein eigenständiger Funktionsblock, sondern teilweise in der Struktur der Komponenten 9-11 implementiert. Der Regelsatz (if...then... - Beschreibung des Reglerverhaltens) ist also weitgehend unveränderlich in der Hardwarestruktur der Komponenten 9-11 enthalten.

Folgende mögliche Verallgemeinerungen können sich aus der Ausführung nach Figur 2 ergeben:

- Die Bildung des zeitlichen Mittelwerts (sowie eventuell der zugehörigen Ableitung) kann mehrfach mit unterschiedlichen Zeitkonstanten geschehen, um auf verschieden schnelle Änderungen des Signalpegels spezifisch reagieren zu können.

- Gleichermaßen kann auch das Signal direkt, also ohne Bildung eines zeitlichen Mittelwertes, der Fuzzyfizierungskomponente 9 zugeführt werden, um auf Signalspitzen reagieren zu können.

- Weitere Signale 22, wie Systeminformationssignale über die momentan am Hörgerät eingestellte Mikrofon/Telefonspulenposition oder zur Kennzeichnung des Batteriezustandes des Hörgerätes, können der Fuzzyfizierungskomponente 9 zugeführt werden, wobei diese Signale 22 vom Controller zur Erzeugung der scharfen Ausgangswerte 8 bzw. 20 mit verarbeitet werden.

- Sowohl mehrere Eingangsgrößen/Meßgrößen 7 als auch Ausgangswerte 8, 20 sind möglich, so daß das Signal an unterschiedlichen Stellen des gesamten Signalpfades in die Regelung mit einbezogen werden kann bzw. die Regelung an mehreren Stellen im Signalpfad eingreifen kann.

In den folgenden schaltungstechnischen Ausführungen erfolgt die Realisierung der erforderlichen Fuzzy-Logik-Komponenten insbesondere in analoger Schaltungstechnik. Fuzzy-Logik-Operationen können als Algorithmen nachgebildet werden, welche auf digitalen Rechen- und Operationswerken ablaufen. Insbesondere wegen des bei Hörgeräten begrenzten kleinen Einbauraums für die Schaltungsbauteile ist bei der heute möglichen Technik die rein digitale schaltungstechnische Realisierung nicht ohne weiteres ausführbar, da die für die digitale Schaltungstechnik erforderliche Fläche auf einem integrierten Schaltkreis für Hörgeräte in der Regel nicht zur Verfügung steht. Außerdem wäre die benötigte Leistungsaufnahme für ein Hörgerät zu groß, da das digitale Operationswerk mit hoher Taktfrequenz arbeiten müßte, um alle notwendigen Operationen in Echtzeit zu realisieren. Die digitale schaltungstechnische Realisierung würde ferner zu einer starken Störung der analogen Signale durch die digitalen Schaltelemente führen.

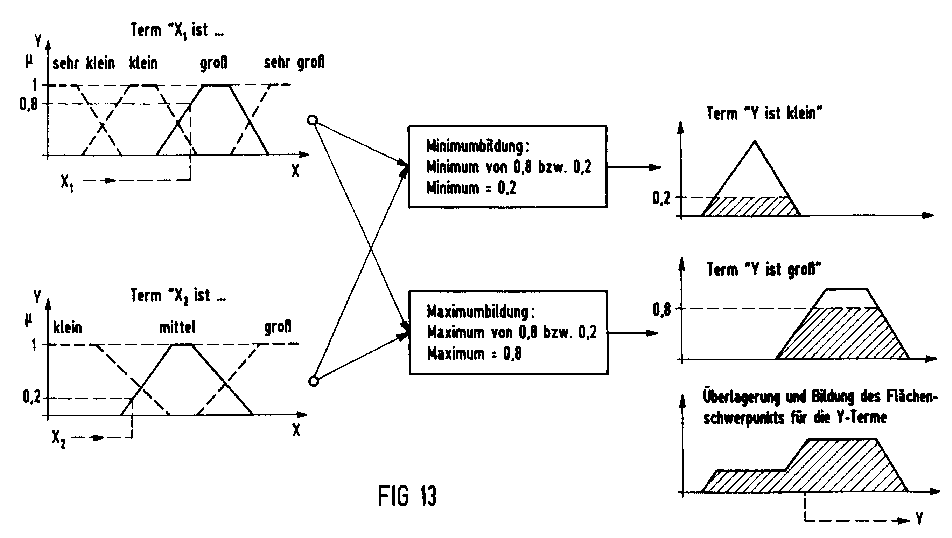

Figur 13 zeigt ein einfaches Fuzzy-Logik-Regelwerk und seine prinzipielle Bearbeitung. Ein erster Schritt für die Implementierung einer Fuzzy-Logik-Struktur ist die Definition der linguistischen Variablen für ihre Eingangs- und Ausgangsgrößen. Für jede dieser Größen werden deren Terme über einer numerischen Werteskala aufgetragen. Über den x-Achsen der gezeichneten Koordinatenkreuze sind variable Größen dargestellt, wobei der Wert $\mu$ in der y-Achse den Erfüllungs- oder Wahrheitsgrad der jeweiligen Aussage angibt.

Aus dem in Figur 13 gezeichneten Beispiel ergibt sich folgender Regelsatz:

1. if $x_1$ ist groß **and** $x_2$ ist mittel **then** y ist klein
2. if $x_1$ ist groß **or** $x_2$ ist mittel **then** y ist groß

Für eine schaltungstechnische Umsetzung dieses beispielhaften Fuzzy-Logik-Regelwerks sind folgende Teilfunktionen zu realisieren:

- Fuzzyfizierung: Abbildung der Eingangswerte auf die linguistischen Variablen, d.h. Ermittlung der Werte der Zugehörigkeitsfunktionen einer jeden Eingangsgröße zu den einzelnen Termen der relevanten linguistischen Variablen. Hierbei kann eventuell auch die Bildung des Komplements des ermittelten Wertes notwendig sein.

- Ermittlung von Minima (als Realisierung des logischen AND) und Maxima (als Realisierung des logischen OR) der miteinander verknüpften aktivierten linguistischen Variablen.

- Überlagerung der aktivierten Ausgangsterme und Bildung des Flächenschwerpunktes.

Speziell für die dargestellte analoge schaltungstechnische Realisierung der Fuzzy-Logik-Operationen ist vor der eigentlichen Verarbeitung eine Aufbereitung des Eingangssignals und auch eines benötigten Einheitssignals/Referenzsignals nötig. Da mit Strom- und nicht mit Spannungssignalen gearbeitet wird, müssen diese vor ihrer Weiterverarbeitung genügend oft dupliziert werden. Außerdem werden sie für die weitere Verarbeitung zum Teil in positiver, zum Teil in negativer Flußrichtung benötigt.

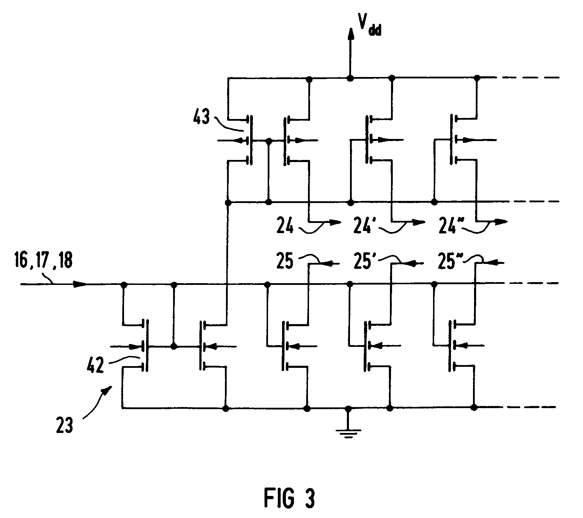

Sowohl das Duplizieren als auch die Richtungsumkehr erfolgt mittels Stromspiegelschaltungen 23 gemäß Figur 3. Die Stromspiegelschaltung 23 ist unter Verwendung von N-MOS-Transistoren 42 und P-MOS-Transistoren 43 aufgebaut. Nach der Erfindung wird jedes der der Fuzzyfizierung 9 zugeführte Signal 16, 17, 18 einem Stromspiegel 23 zugeführt und in mehrere gleich große Stromsignale von gleicher Stromrichtung 24, 24', 24'' sowie von entgegengesetzter Stromrichtung 25, 25', 25'' umgesetzt. Vdd gibt in der Zeichnung den Schaltungsanschluß zur Versorgungsspannung an, wobei die stromspiegelschaltung 23 an sich bekannt ist.

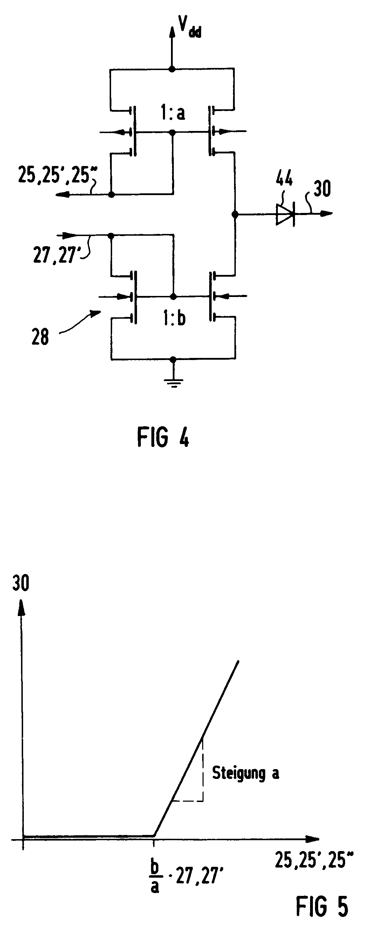

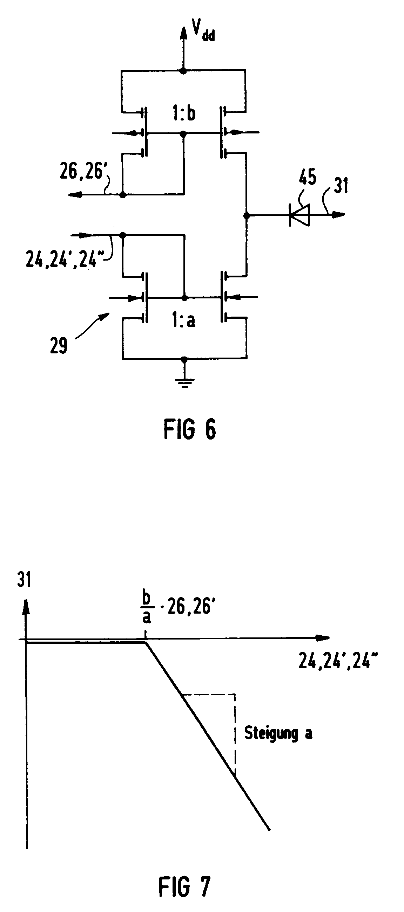

Die Fuzzyfizierung (Ermittlung der Zugehörigkeitsgrade des Eingangssignals zu den einzelnen Termen der linguistischen Variablen) erfolgt mittels der beiden in den Figuren 4 und 6 dargestellten Schaltungen 28 bzw. 29. Jede der beiden Schaltungen 28, 29 realisiert dabei ein Teilsegment der Zugehörigkeitsfunktion.

Funktionsweise der Schaltungen 28, 29:
Den Transistorschaltungen 28, 29 werden Einheitsstromsignale 26, 26' bzw. 27, 27' zugeführt. Dabei ist ein vorgegebenes Einheitsstromsignal/Referenzsignal über einen Stromspiegel der genannten Art in entsprechende Einheitsstromsignale 26, 26' bzw. 27, 27' duplizierbar. Der Einheitsstromwert dieser Referenz-Stromsignale entspricht dem maximalen Wert 1 der Stromsignale 24, 24', 24'' bzw. 25, 25', 25''. Durch eine entsprechende Dimensionierung der Stromspiegel 28, 29 (Auslegung der Transistorgrößenverhältnisse) wird erreicht, daß die zugeführten Stromsignale 24, 24', 24'' bzw. 25, 25', 25'' im Verhältnis 1:a von der Eingangsseite auf die Ausgangsseite gespiegelt werden und die Einheits-Stromsignale 26, 26' bzw. 27, 27' im Verhältnis 1:b. Durch die Sperrwirkung der Dioden 44 bzw. 45 in einer Richtung ergeben sich die in den Figuren 5 bzw. 7 dargestellten Stromübertragungsverhältnisse. Die Größen a und b stellen die Transistorgrößenverhältnisse in den Schaltungen 28, 29 dar. Gleichzeitig erscheinen die Größen a und b in den zu den Schaltungen 28, 29 gehörenden Kennlinien gemäß den Figuren 5 bzw. 7. Danach sind die Stromausgangswerte 30, 31 der Schaltungen 28 bzw. 29 so lange gleich Null, bis der Stromwert der zugeführten Stromsignale 25, 25', 25'' bzw. 24, 24', 24'' den Wert

$$\frac{b}{a} \bullet (26, \ 26')$$

bzw. den Wert

$$\frac{b}{a} \bullet (27, \ 27')$$

überschreitet. Dann wachsen die Stromausgangswerte 30, 31 linear mit der Steigung a an bzw. fallen linear mit der Steigung a ab. Die Auslegung der Transistorgrößenverhältnisse a bzw. b der mit N-MOS- und P-MOS-Transistoren aufgebauten Transistorschaltungen bestimmt den Kurvenverlauf der Stromausgangswerte 30, 31. Durch eine Überlagerung der von den Schaltungen 28 und 29 gebildeten Teilsegmente (was einer Parallelschaltung der jeweiligen entsprechend dimensionierten Schaltungsteile entspricht) läßt sich jede gewünschte Zugehörigkeitsfunktion aus Geradenstücken approximieren. Je gröber die Approximation ist, d.h. je weniger Geradenstücke verwendet werden, desto geringer ist der Schaltungsaufwand.

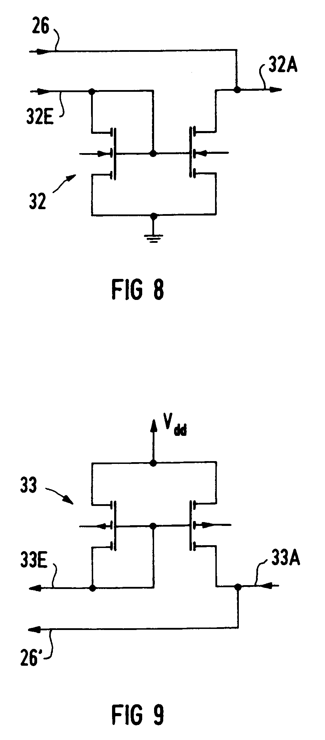

Erfordert eine Negation im Regelwerk die Bildung des Komplements von einem oder von mehreren linguistischen Termen, so kann dies dadurch erfolgen, daß den oben beschriebenen Schaltungsgruppen eine der Schaltungen gemäß den Figuren 8, 9 nachgeordnet wird. Gemäß den Figuren 8, 9 ergibt sich der Stromausgangswert 32A bzw. 33A der Stromspiegelschaltung 32 bzw. 33 aus der Differenz zwischen dem Einheits- oder Referenzstrom 26, 26' und einem Eingangs-Stromsignal 32E, 33E. Beispielsweise ergibt sich der Stromausgangswert 32A aus dem Einheitsstrom/Referenzstrom 26 abzüglich des Stromwertes des Eingangs-Stromsignales 32E, wobei der Einheitsstrom 26 den Wert 1 besitzt und das Eingangs-Stromsignal 32E einen Wert zwischen Null und 1 hat.

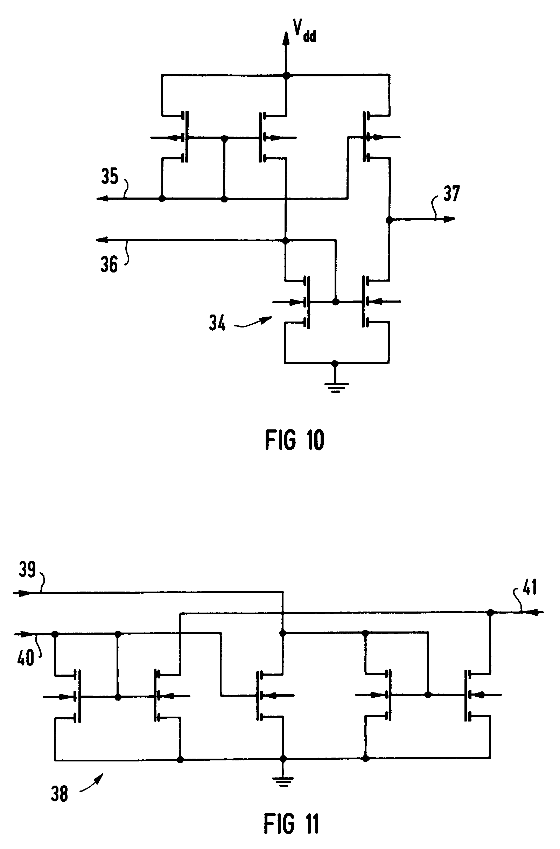

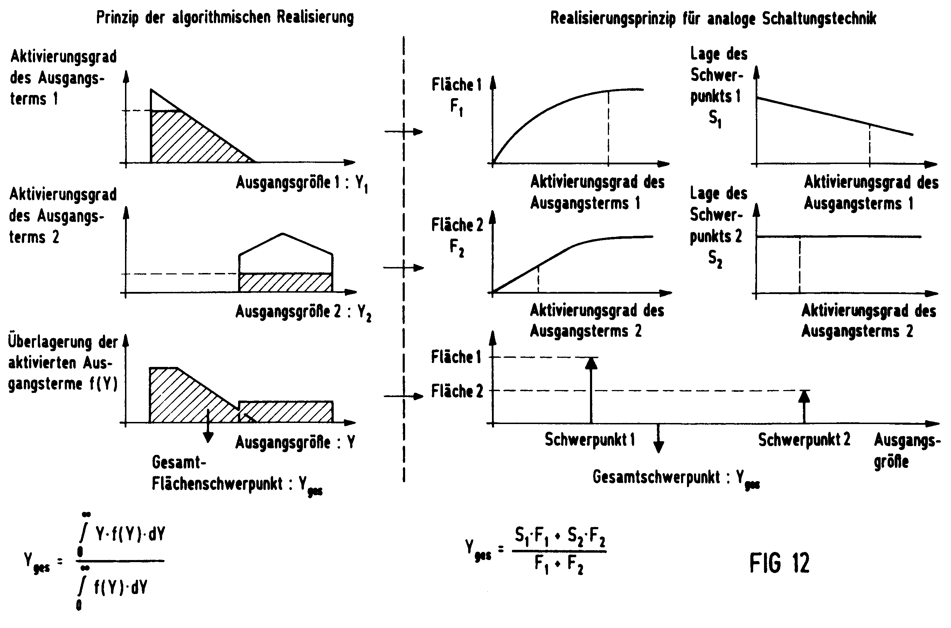

Inferenzbildung:
Werden die beiden logischen Operationen AND und OR, wie meist üblich, als Minimum- und Maximum-Bildung realisiert, dann sind hierfür die beiden Schaltungen 34, 38 nach Figur 10 und 11 einsetzbar. Die Stromausgangssignale 37 bzw. 41 der Schaltung 34 nach Figur 10 bzw. der Schaltung 38 nach Figur 11 stellen jeweils das Minimum (Figur 10) bzw. das Maximum (Figur 11) der beiden Stromeingangssignale 35, 36 bzw. 39, 40 dar. Sind mehr als zwei Eingangsgrößen zu verarbeiten, dann können die betreffenden Schaltungen entsprechend kaskadiert eingesetzt werden.

Defuzzyfizierung (Überlagerung der aktivierten Ausgangsterme und Bildung des Flächenschwerpunktes):

Diese Operation kann in digital realisierten Fuzzy-Logik-Systemen mit Hilfe eines Algorithmus implementiert werden. Für die Umsetzung in analoger Technik ist dagegen der Übergang zu einer anderen formellen Darstellung dieser Operationsschritte notwendig, wie in Figur 12 gezeigt wird. Die Aktivierung eines Ausgangsterms liefert eigentlich zwei Werte, nämlich die aktivierte Fläche des Ausgangsterms und den zugehörigen Flächenschwerpunkt. Beide Größen lassen sich deshalb auch getrennt darstellen, nämlich als zwei getrennte Funktionen einer gemeinsamen Variablen. Schaltungstechnisch realisieren lassen sie sich dann prinzipiell genauso wie die oben erläuterten Zugehörigkeitsfunktionen. Die Überlagerung der aktivierten Ausgangsterme und die Bildung ihres gemeinsamen Schwerpunktes (defuzzifizierter Ausgangswert) geschieht nun durch die in Figur 12 angegebene Rechenoperation nach der Formel

$$Y_{ges} = \frac{\sum\limits_{n=1}^{N} S_n \cdot F_n}{\sum\limits_{n=1}^{N} F_n}$$

dabei ist

$Y_{ges}$ =     scharfer Ausgangswert (Gesamtschwerpunkt)

$S_n$ =     Schwerpunktslage des n-ten aktivierten Ausgangsterms

$F_n$ =     Fläche des n-ten aktivierten Ausgangsterms

N =     Anzahl aller Ausgangsterme.

Hiernach werden zwei Werte gebildet. Der erste Wert ergibt sich aus der Summe aller aktivierten Flächen und multipliziert mit dem jeweils zugehörigen Schwerpunkt der aktivierten Fläche. Der zweite Wert ist die Summe aller aktivierten Flächen. Wird der erste Wert durch den zweiten Wert dividiert, ergibt sich der zu ermittelnde Ausgangswert. Die Operationen für die Multiplikation und Division lassen sich durch geläufige Schaltungen der Analogtechnik realisieren. Die Additionen der Ströme erfolgen in den Schaltungsknoten.

Im Gesamtsignalpfad des Fuzzy-Logik-Reglers kann an manchen Schnittstellen zwischen den hier dargestellten Schaltungsblöcken die Umkehr der Flußrichtung der Stromsignale erforderlich sein. Dies wird dann durch Einsatz herkömmlicher Stromspiegel realisiert.

Aufbau und Funktion einer Entscheidungsmittel-Komponente des Fuzzy-Logik-Controllers:

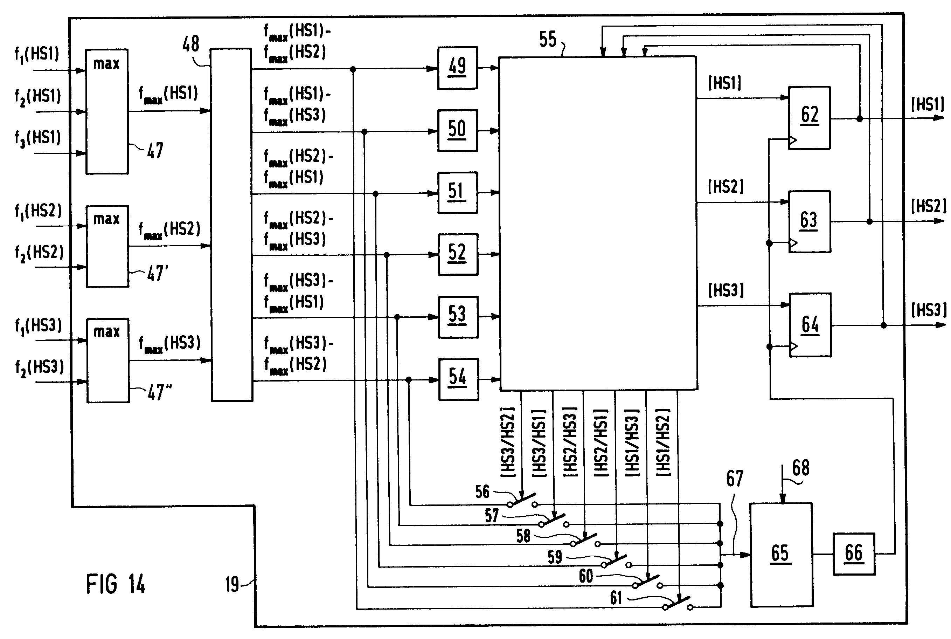

Figur 14 zeigt ein Ausführungsbeispiel einer Entscheidungsmittel-Komponente 19 des Fuzzy-Logik-Controllers für eine Auswahlfunktion von drei zur Auswahl stehenden Hörsituationen HS1, HS2 und HS3.

Soll die Ausgangsgröße des Controllers 6 nicht ein kontinuierlicher Wert sein, sondern eine Entscheidungsgröße für eine Hörsituation aus mehreren möglichen Hörsituationen oder einen Parameterwert aus mehreren möglichen Parameterwerten, so muß sich an die Inferenz statt der Defuzzyfikation eine sogenannte 1-aus-N-Entscheidung anschließen.

Ein vereinfachtes Beispiel für einen Regelsatz, welcher eine derartige Entscheidung beschreibt, könnte bei einem Zweikanal-Hörgerät lauten:

**If** Pegel im Kanal 1 ist niedrig **and** Pegel im Kanal 2 ist niedrig **then** Hörsituation HS1

**If** Pegel im Kanal 1 ist mittel **and** Pegel im Kanal 2 ist mittel **then** Hörsituation HS1

**If** Pegel im Kanal 1 ist niedrig **and** Pegel im Kanal 2 ist groß **then** Hörsituation HS1

**If** Pegel im Kanal 1 ist mittel **and** Pegel im Kanal 2 ist niedrig **then** Hörsituation HS2

**If** Pegel im Kanal 1 ist hoch **and** Pegel im Kanal 2 ist mittel **then** Hörsituation HS2

Handelt es sich beim Ausgang des Fuzzy-Logik-Controllers 6 um eine 1-aus-N-Entscheidung, so muß sichergestellt werden, daß es bei Vorliegen entsprechender Grenzbedingungen nicht zu einem ständigen Hin- und Herschalten zwischen zwei oder mehreren Entscheidungen kommt. Eine derartige Hysterese für die Umschaltentscheidung kann erzeugt werden, indem die Differenz zwischen der Stärke der jeweils vorgeschlagenen Entscheidung und der Stärke der momentan eingestellten Entscheidung berechnet wird. Nur wenn diese Differenz eine bestimmte vorgegebene Schwelle überschreitet, findet ein Umschalten statt.

Das Blockschaltbild gemäß Figur 14 zeigt eine mögliche Realisierung der 1-aus-N-Auswahlfunktion, wobei hier beispielhaft drei Hörsituationen HS1, HS2 und HS3 zur Auswahl stehen. Zur diskontinuierlichen Veränderung des Übertragungsverhaltens erfolgt in der Entscheidungsmittel-Komponente 19 des Controllers 6 eine Auswahl von gespeicherten Werten. Dabei umfaßt die Entscheidungsmittel-Komponente 19 erste Mittel 47, 47', 47" zur Bildung des jeweiligen Maximums aller aktivierten Terme für jede Entscheidungsalternative, wobei diesen Schaltungsmitteln Stromeingangssignale f1(HS1), f2(HS1), f3(HS1); f1(HS2), f2(HS2); f1(HS3), f2(HS3) aus der Inferenzbildungs-Komponente 10 zugeführt und in dieser Schaltung zu einem das Maximum darstellenden Stromausgangssignal fmax(HS1), fmax(HS2), fmax(HS3) verarbeitet werden. Eine Ausführung für eine Schaltungsanordnung zur Maximum-Bildung zeigt Figur 11.

In einem weiteren Funktionsblock umfaßt die Entscheidungsmittel-Komponente 19 zweite Mittel 48 zur Bildung aller beschränkten Differenzen aus den Ausgangsgrößen der ersten Mittel 47, 47', 47''. Erläuterung der beschränkten Differenz: A-B = A-B, falls A>B; A-B = 0, falls A<B. Hierzu wird jedes Eingangsstromsignal über einen Stromspiegel 23 genügend oft und in beiden Flußrichtungen dupliziert und sodann alle jeweils miteinander zu verarbeitenden Signale einem Stromspiegel 32 bzw. 33 mit nachgeschalteter Diode zugeführt, welcher daraus die beschränkte Differenz bildet. Diese Ergebnisse werden durch Schaltmittel 49-54 zur Umsetzung jeweils eines analogen Stromsignals in ein digitales Spannungssignal digitalisiert und einem digitalen Schaltkreis 55 zugeführt. Dieser digitale Schaltkreis 55 bildet nach einfachen logischen Gesetzmäßigkeiten folgende digitale Größen:

Der Vorschlag für Hörsituation HS1 ist der stärkste [HS1]

Der Vorschlag für Hörsituation HS2 ist der stärkste [HS2]

Der Vorschlag für Hörsituation HS3 ist der stärkste [HS3]

Der Vorschlag für HS1 ist der stärkste und HS2 ist momentan aktiv [HS1/HS2]

Der Vorschlag für HS1 ist der stärkste und HS3 ist momentan aktiv [HS1/HS3]

Der Vorschlag für HS2 ist der stärkste und HS1 ist momentan aktiv [HS2/HS1]

Der Vorschlag für HS2 ist der stärkste und HS3 ist momentan aktiv [HS2/HS3]

Der Vorschlag für HS3 ist der stärkste und HS1 ist momentan aktiv [HS3/HS1]

Der Vorschlag für HS3 ist der stärkste und HS2 ist momentan aktiv [HS3/HS2]

Von den Größen [HS1], [HS2], [HS3] ist immer genau eine logisch wahr. Sie werden an die Dateneingänge von digitalen Speichermitteln 62-64 geführt. Die Übernahme dieser Größen in die Speichermittel 62-64 hängt jedoch von einem Steuersignal ab, das nur dann aktiv ist, wenn der jeweils momentan stärkste Vorschlag um ein vorgegebenes Minimum größer als der Vorschlag für die momentan aktive Hörsituation ist.

Dazu steuern die Signale [HS1/HS2], [HS1/HS3], [HS2/HS1], [HS2/HS3], [HS3/HS1], [HS3/HS2] Schalter 56-61 in der Weise, daß die beschränkte Differenz zwischen der Stärke des momentan stärksten Hörsituationsvorschlags und der Stärke der momentan aktiven Hörsituation als Signal 67 einem Schaltmittel 65 zugeführt wird, welches das Signal 67 mit einem vorgegebenen Referenzsignal 68 vergleicht. Hierzu wird wiederum die beschränkte Differenz zwischen dem Referenzwert 68 und dem Signal 67 gebildet. Der Ausgang wird wiederum in einem Schaltmittel 66 digitalisiert.

Nur wenn der Referenzwert überschritten wird, wird das Steuersignal für die Übernahme der Auswahlsignale in die Datenspeicher aktiv. Dadurch ist die oben beschriebene Hysterese für die Umschaltentscheidung gewährleistet.

Bei der Schaltung zur Entscheidungsmittel-Komponente 19 ist wiederum zu beachten, daß alle analogen Größen durch Ströme repräsentiert sind, dagegen die digitalen Größen durch Spannungspegel. Wird in der Schaltung ein Stromsignal mehrfach ausgewertet bzw. weiterverarbeitet, so wird es zuvor mit Hilfe von Stromspiegeln entsprechend oft vervielfacht. Die Funktionen Maximum-Bildung und Bildung der beschränkten Differenz sind Grundfunktionen der Fuzzyfizierung und Inferenzbildung und bereits bei der Beschreibung dieser Komponenten erörtert.

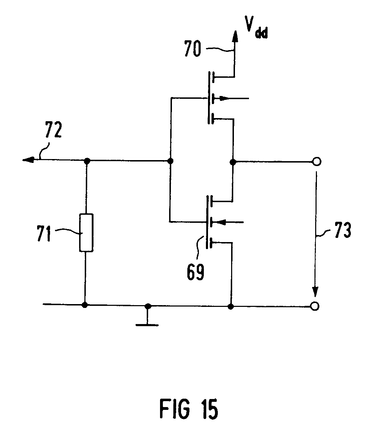

Nach Figur 15 ist aufgezeigt, daß die Schaltmittel 49-54 sowie 66 zur Umsetzung jeweils eines analogen Stromsignals 72 in ein digitales Spannungssignal 73 jeweils aus einem N-MOS-Transistor 69 und einem P-MOS-Transistor 70 sowie wenigstens einem Widerstand 71 bestehen. Das Spannungsausgangssignal 73 = Versorgungsspannung Vdd, wenn das Stromeingangssignal 72 > Null und das Spannungsausgangssignal 73 = Null, wenn das Stromeingangssignal 72 < Null.

Ein erfindungsgemäß mit einem Controller versehenes Hörgerät zeichnet sich durch eine bessere Anpassung des Hörgerätes an den Hörschaden durch fortlaufende signalabhängige Einstellung von Signalverarbeitungsparametern aus. Ferner entlastet ein solches Hörgerät den Hörgeräteträger durch automatische Auswahl von Signalverarbeitungsparametern oder Sätzen von Signalverarbeitungsparametern/Hörsituationen.

**Patentansprüche**

1. Programmierbares Hörgerät (1) mit einem in seinen Übertragungseigenschaften zwischen Mikrofon (2) und Hörer (3) auf verschiedene Übertragungscharakteristika einstellbaren Verstärker- und Übertragungsteil (4), mit einem Datenträger (5), in dem Parametersätze für verschiedene Umgebungssituationen speicherbar sind und wobei die Übertragungscharakteristik des Verstärker- und Übertragungsteils in Abhängigkeit von der jeweiligen Umgebungssituation auf den zugeordneten Parametersatz automatisch umschaltbar ist, wobei zur automatischen Umschaltung dem Verstärker- und Übertragungsteil (4) ein Controller (6) zugeordnet ist, der in Abhängigkeit von die jeweilige Umgebungssituation kennzeichnenden Eingangsgrößen (7) eine Auswahl der im Datenträger (5) gespeicherten Parametersätze oder von Parametern zur Veränderung von Übertragungscharakteristiken des Hörgerätes (1) vornimmt.

2. Hörgerät nach Anspruch 1, **dadurch gekennzeichnet,** daß als Controller (6) ein Fuzzy-Logik-Controller vorgesehen ist.

3. Hörgerät nach Anspruch 1 und 2, **dadurch gekennzeichnet,** daß der Controller (6) bei der Veränderung der Übertragungscharakteristika abgespeicherte Parametersätze oder einzelne Parameterwerte auswählt und damit eine diskontinuierliche Veränderung des Übertragungsverhaltens bewirkt.

4. Hörgerät nach Anspruch 1 und 2, **dadurch gekennzeichnet,** daß der Controller (6) aus den die jeweilige Umgebungssituation kennzeichnenden Eingangsgrößen (7) Steuersignale (8) bestimmt, die zu einer kontinuierlichen Veränderung des Übertragungsverhaltens führen.

5. Hörgerät nach den Ansprüchen 1 bis 4, **dadurch gekennzeichnet,** daß der Fuzzy-Logik-Controller (6) Komponenten zur Fuzzyfizierung (9), Inferenzbildung (10) und Defuzzyfizierung (11) sowie zur Signalaufbereitung (12) aufweist, wobei der Signalaufbereitung als Eingangsgrößen (7) Meßgrößen aus dem Signalpfad zwischen Mikrofon (2) und Hörer (3) zugeführt und diese Meßgrößen (7) in der Signalaufbereitung (12) durch Gleichrichtung (13) und/oder Mittelwertbildung (14) und/oder zeitliche Ableitung (15) bearbeitet und wobei die aus den Meßgrößen aufbereiteten Signale (16, 17, 18) der Fuzzyfizierung (9) zugeführt werden.

6. Hörgerät nach den Ansprüchen 1 bis 4, **dadurch gekennzeichnet,** daß der Fuzzy-Logik-Controller (6) Komponenten zur Signalaufbereitung (12), zur Fuzzyfizierung (9) und Inferenzbildung (10) sowie ein Entscheidungsmittel (19) aufweist, das aus eingehenden unscharfen Signalen scharfe Ausgangswerte (20) durch Auswahl aus einem vorgegebenen Satz von Ausgangswerten bestimmt, wobei der Signalaufbereitung (12) als Eingangsgrößen (7) Meßgrößen aus dem Signalpfad zwischen Mikrofon (2) und Hörer (3) zugeführt und diese Meßgrößen (7) in der Signalaufbereitung (12) durch Gleichrichtung (13) und/oder Mittelwertbildung (14) und/oder zeitliche Ableitung (15) bearbeitet und wobei die aus den Meßgrößen aufbereiteten Signale (16, 17, 18) der Fuzzyfizierung (9) zugeführt werden.

7. Hörgerät nach einem oder mehreren der Ansprüche 1 bis 6, **dadurch gekennzeichnet,** daß das Regelverhalten des Controllers (6) von einem Regelwerk bestimmt ist, wobei dieses Regelwerk teilweise in der Struktur des Controllers implementierbar ist und wobei dem Controller (6) ein Datenspeicher (21 - EEPROM) zugeordnet ist, in dem Konfigurationsinformation für die Controller-Komponenten abrufbar gespeichert ist.

8. Hörgerät nach den Ansprüchen 1 bis 7, **dadurch gekennzeichnet,** daß Signale (22) zur Kennzeichnung der Betriebsart des Hörgerätes (z.B. Telefonspulenbetrieb), zur Kennzeichnung des Batteriezustandes od.dgl. direkt der Fuzzyfizierung (9) des Fuzzy-Logik-Controllers (6) zuführbar sind und diese Signale (22) vom Controller zur Erzeugung der Ausgangswerte (8, 20) mit verarbeitet werden.

9. Hörgerät nach den Ansprüchen 1 bis 8, **dadurch gekennzeichnet,** daß die Fuzzyfizierungskomponente (9) des Fuzzy-Logik-Controllers (6) in analoger Schaltungstechnik ausgeführt ist.

10. Hörgerät nach Anspruch 9, **dadurch gekennzeichnet,** daß jedes der Fuzzyfizierung (9) zugeführte Signal (16, 17, 18) einem Stromspiegel (23) zugeführt und in mehrere gleich große Stromsignale von gleicher Stromrichtung (24, 24', 24'') sowie von entgegengesetzter Stromrichtung (25, 25', 25'') umgesetzt wird (Figur 3).

11. Hörgerät nach den Ansprüchen 9 und 10, **dadurch gekennzeichnet,** daß ein vorgegebenes Einheitssignal (Referenzsignal) über einen gleichartigen Stromspiegel in entsprechende mehrfache Einheits-Stromsignale (26, 26'; 27, 27') umgesetzt wird.

12. Hörgerät nach den Ansprüchen 9 bis 11, **dadurch gekennzeichnet,** daß zur Bildung der linguistischen Terme des Fuzzy-Logik-Controllers (6) die Stromsignale (24, 24', 24'' bzw. 25, 25', 25'') und die Einheits-Stromsignale (26, 26', 27, 27') in Schaltungen (28, 29) zu Stromausgangswerten (30, 31) verarbeitet und wobei diese Stromausgangswerte zur Termenbildung überlagert werden (Figuren 4 bis 7).

13. Hörgerät nach Anspruch 7 und 12, **dadurch gekennzeichnet,** daß bei einer Negation im Regelwerk der Schaltungsanordnung nach Anspruch 12 Stromspiegelschaltungen (32, 33) nachgeordnet sind, die zur Komplementbildung der linguistischen Terme führen (Figur 8, 9).

**14.** Hörgerät nach den Ansprüchen 1 bis 8, **dadurch gekennzeichnet,** daß die Inferenzbildungskomponente (10) des Fuzzy-Logik-Controllers (6) in analoger Schaltungstechnik ausgeführt ist.

**15.** Hörgerät nach Anspruch 14, **dadurch gekennzeichnet,** daß die "and"- und "or"-Funktionen der Inferenzbildungskomponente (10) durch "Minimum-" und "Maximum-Bildung" der zu verknüpfenden Signale ausgeführt sind.

**16.** Hörgerät nach Anspruch 14 und 15, **dadurch gekennzeichnet,** daß für die Funktion der Inferenzbildungskomponente (10) zur "Minimum-Bildung" einer Schaltung (34) Stromeingangssignale (35, 36) aus der Fuzzyfizierungskomponente (9) zugeführt und in der Schaltung (34) zu einem das "Minimum" darstellenden Stromausgangssignal (37) verarbeitet werden (Figur 10).

**17.** Hörgerät nach Anspruch 14 und 15, **dadurch gekennzeichnet,** daß für die Funktion der Inferenzbildungskomponente (10) zur "Maximum-Bildung" einer Schaltung (38) Stromeingangssignale (39, 40) aus der Fuzzyfizierungskomponente (9) zugeführt und in der Schaltung (38) zu einem das "Maximum" darstellenden Stromausgangssignal (41) verarbeitet werden (Figur 11).

**18.** Hörgerät nach Anspruch 9 und 14, **dadurch gekennzeichnet,** daß in analoger Schaltungstechnik in der Defuzzyfizierungskomponente (11) die Bildung der "scharfen" Ausgangswerte nach

$$Y_{ges} = \frac{\sum\limits_{n=1}^{N} S_n \cdot F_n}{\sum\limits_{n=1}^{N} F_n}$$

erfolgt,
dabei ist

$Y_{ges}$ = scharfer Ausgangswert (Gesamtschwerpunkt)

$S_n$ = Schwerpunktslage des n-ten aktivierten Ausgangsterms

$F_n$ = Fläche des n-ten aktivierten Ausgangsterms

$N$ = Anzahl aller Ausgangsterme.

**19.** Hörgerät nach einem oder mehreren der Ansprüche 1 bis 18, **dadurch gekennzeichnet,** daß zur diskontinuierlichen Veränderung des Übertragungsverhaltens in der Entscheidungsmittel-Komponente (19) des Controllers (6) eine Auswahl von gespeicherten Werten erfolgt, wobei die Entscheidungsmittel-Komponente

- erste Mittel (47, 47', 47'') zur Bildung des jeweiligen Maximums aller aktivierten Terme für jede Entscheidungsalternative,
- zweite Mittel (48) zur Bildung aller beschränkten Differenzen aus den Ausgangsgrößen des ersten Mittels (47, 47', 47''),
- Schaltmittel (49-54, 66) zur Umsetzung jeweils eines analogen Stromsignals in ein digitales Spannungssignal,
- einen digitalen Schaltkreis (55) sowie Schalter (56-61)

umfaßt, wobei dem digitalen Schaltkreis (55) digitale Speichermittel (62-64) nachgeordnet und den Schaltern (56-61) ein Schaltmittel (65) zur Bildung der beschränkten Differenz zwischen einem Referenzsignal (68) und dem geschalteten Signal (67) sowie ein Schaltmittel (66) zur Umsetzung eines analogen Stromsignals in ein digitales Spannungssignal zugeordnet ist.

**20.** Hörgerät nach Anspruch 19. **dadurch gekennzeichnet,** daß für die Funktion der Entscheidungsmittel-Komponente (19) zur Bildung des jeweiligen Maximums aller aktivierten Terme für jede Entscheidungsalternative Schaltungen oder Kaskaden von Schaltungen (38) Stromsignale (f1(HS1), ... f2(HS3)) zugeführt und in diesen Schaltungen zu jeweils das "Maximum" darstellenden Stromausgangssignalen (fmax(HS1) ... fmax(HS3)) verarbeitet werden.

**21.** Hörgerät nach Anspruch 19, **dadurch gekennzeichnet,** daß im zweiten Mittel (48) zur Bildung aller beschränkten Differenzen jedes Eingangssignal mittels eines Stromspiegels (23) genügend oft und in beiden Flußrichtungen dupliziert wird und sodann alle jeweils miteinander zu verarbeitenden Eingangssignale einem Stromspiegel (32 bzw. 33) mit nachgeschalteter Diode zugeführt werden, welcher daraus die jeweilige beschränkte Differenz bildet.

**22.** Hörgerät nach Anspruch 19, **dadurch gekennzeichnet,** daß die Schaltmittel (49-54, 66) zur Umsetzung jeweils eines analogen Stromsignals (72) in ein digitales Spannungssignal (73) jeweils aus einem N-MOS-Transistor (69) und einem P-MOS-Transistor (70) sowie wenigstens einem Widerstand (71) bestehen (Figur 15).

FIG 1

FIG 2

FIG 3

$V_{dd}$

1 : a

25,25',25"

44

30

27,27'

28

1 : b

FIG 4

30

Steigung a

$\frac{b}{a} \cdot 27,27'$

25,25',25"

FIG 5

**FIG 6**

**FIG 7**

26

32A

32E

32

**FIG 8**

$V_{dd}$

33

33E

33A

26'

**FIG 9**

35

37

36

34

**FIG 10**

39

41

40

38

**FIG 11**

**Prinzip der algorithmischen Realisierung**

Aktivierungsgrad des Ausgangsterms 1

Ausgangsgröße 1 : $Y_1$

Aktivierungsgrad des Ausgangsterms 2

Ausgangsgröße 2 : $Y_2$

Überlagerung der aktivierten Ausgangsterme f(Y)

Ausgangsgröße : Y

Gesamt-Flächenschwerpunkt : $Y_{ges}$

$$Y_{ges} = \frac{\int_0^\infty Y \cdot f(Y) \cdot dY}{\int_0^\infty f(Y) \cdot dY}$$

**Realisierungsprinzip für analoge Schaltungstechnik**

Fläche 1 $F_1$

Aktivierungsgrad des Ausgangsterms 1

Lage des Schwerpunkts 1 $S_1$

Aktivierungsgrad des Ausgangsterms 1

Fläche 2 $F_2$

Aktivierungsgrad des Ausgangsterms 2

Lage des Schwerpunkts 2 $S_2$

Aktivierungsgrad des Ausgangsterms 2

Fläche 1
Fläche 2

Schwerpunkt 1    Schwerpunkt 2    Ausgangsgröße

Gesamtschwerpunkt : $Y_{ges}$

$$Y_{ges} = \frac{S_1 \cdot F_1 + S_2 \cdot F_2}{F_1 + F_2}$$

FIG 12

Term "X₁ ist ...

FIG 13

FIG 14

EP 0 674 464 A1

FIG 15

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 341 997 (MINNESOTA MINING AND MANUFACTURING COMPANY) * Seite 2, Zeile 57 - Seite 4, Zeile 18; Abbildung 2 * * Seite 8, Zeile 18 - Zeile 54; Abbildungen 5-7 * | 1 | H04R25/00 G06G7/60 |
| A,D | EP-A-0 064 042 (MANGOLD ET AL.) * Seite 4, Zeile 15 - Seite 6, Zeile 24; Abbildungen 1,2 * | 1,3,4 | |
| A | EP-A-0 398 536 (PIONEER ELECTRONIC CORPORATION) * Seite 2, Spalte 1, Zeile 9 - Spalte 2, Zeile 43; Abbildung 1 * * Seite 5, Spalte 8, Zeile 6 - Zeile 57; Abbildungen 9A,9B,10 * | 2,5,6,18 | |
| A | US-A-4 716 540 (YAMAKAWA) * Spalte 4, Zeile 19 - Spalte 13, Zeile 34; Abbildungen * | 9-17 | RECHERCHIERTE SACHGEBIETE (Int.Cl.6) |
| A | US-A-5 292 995 (USA) * Spalte 6, Zeile 49 - Spalte 10, Zeile 33; Abbildungen 2A,2B,2C,2D * | 18-22 | H04R H03K G06G |

Der vorliegende Recherchenbericht wurde für alle Patentansprüche erstellt

| Recherchenort | Abschlußdatum der Recherche | Prüfer |
|---|---|---|
| DEN HAAG | 2. September 1994 | Gastaldi, G |